# EUROPÄISCHE PATENTANMELDUNG

(11) **EP 3 974 600 A1**
(43) Veröffentlichungstag der Anmeldung: **30.03.2022**
(21) Anmeldenummer: 21198060.2
(22) Anmeldetag: 21.09.2021
(51) Int. Cl.: E04H 6/02, F24S 40/44, E04D 3/08

(54) **DACHKONSTRUKTION FÜR EINEN CARPORT ODER EINEN UNTERSTAND**

(30) Priorität: 23.09.2020 DE 102020124831
(71) Anmelder: Grimmeisen, Jürgen, 70469 Stuttgart (DE)
(72) Erfinder: KROCKENBERGER, Tino, 70569 Stuttgart (DE)
(74) Vertreter: Herrmann, Jochen

(57) **Zusammenfassung**

Die Erfindung betrifft eine Dachkonstruktion für einen Carport oder einen Unterstand mit Längs- und Querstreben (20, 30), die in den Eckbereichen des Dachs mittelbar oder unmittelbar miteinander verbunden sind, wobei die Längsstreben (30) über Tragstreben (50, 60) miteinander gekoppelt sind, die sich zumindest bereichsweise zwischen den Längsstreben (30) erstrecken, wobei an zumindest einer Tragstrebe (50) Flächenelemente (40) an gegenüberliegenden Seiten angeschlossen sind, die einen Teil der Dachfläche bilden und die zueinander in einem Winkel stehen, um ein Dachgefälle zur Ableitung von Regenwasser derart zu bilden, dass die Flächenelemente (40) in Richtung zu der Tragstrebe (50) hin geneigt zur Horizontalen verlaufen und die Oberseiten der Flächenelemente (40) zueinander V-förmig angestellt sind, wobei die Tragstrebe (50) eine Rinne (55) aufweist, in die die Oberseiten der Flächenelemente (40) hinein entwässern und die sich in Längsrichtung der Tragstrebe (50) bis hin zu zumindest einer der Längsstreben (30) erstreckt, und wobei die Flächenelemente (40) mit Photovoltaikelementen ausgestattet sind, welche mit einer für Licht durchlässigen Scheibe (41) überdeckt sind, wobei die Scheiben (41) zumindest bereichsweise die Oberseite der Flächenelemente (40) bilden. Mit einer solchen Dachkonstruktion kann bei einem ebenen Erscheinungsbild des Dachs eine effektive Entwässerung und Selbstreinigung der Dachfläche erreicht werden. Gleichzeitig ist eine hohe Stromausbeute möglich.

## Beschreibung

Dachkonstruktion für einen Carport oder einen Unterstand mit Längs- und Querstreben, die in den Eckbereichen des Dachs mittelbar oder unmittelbar miteinander verbunden sind.

WO 2015/028174 A1 offenbart eine Dachkonstruktion mit einer Tragstruktur. An der Tragstruktur sind schwenkbare Lamellen angebracht, wobei die Lamellen in einem Schließzustand eine durchgehende Dachfläche bilden. In einem geöffneten Zustand, bei dem die Lamellen geschwenkt sind, entstehen zwischen den Lamellen Freiräume. Die Lamellen sind mit Fotovoltaik Modulen ausgestattet. Über die Schwenkstellung der Lamellen kann die ideale Zuordnung zu der Sonneneinstrahlung getroffen werden. Zudem kann im geöffneten Zustand der Lamellen eine Entlüftung des Bereichs unterhalb des Dachs bewirkt werden.

Eine ähnliche Dachkonstruktion ist auch aus DE 10 2016 117 772 A1 bekannt

Es ist Aufgabe der Erfindung, eine mit Fotovoltaik Modulen ausgestattete Dachkonstruktion der eingangs erwähnten Art bereitzustellen, die einen einfachen Aufbau aufweist und die auch bei unterschiedlichen Einstrahlwinkeln der Sonne auf die Dachfläche eine gute Stromausbeute ermöglicht. Es ist insbesondere auch Aufgabe der Erfindung, eine Dachkonstruktion bereitzustellen, die bei einem ebenen Erscheinungsbild des Daches eine effektive Entwässerung der Dachfläche und auch die Möglichkeit der Selbstreinigung bietet.

Diese Aufgabe wird mit den Merkmalen des Anspruchs 1 gelöst. Demgemäß ist es vorgesehen, dass die Längsstreben über Tragstreben miteinander gekoppelt sind, die sich zumindest bereichsweise zwischen den Längsstreben erstrecken, wobei an zumindest einer Tragstrebe Flächenelemente an gegenüberliegenden Seiten angeschlossen sind, die einen Teil der Dachfläche bilden und die zueinander in einem Winkel stehen, um ein Dachgefälle zur Ableitung von Regenwasser derart zu bilden, dass die Flächenelemente in Richtung zu der Tragstrebe hin geneigt zur Horizontalen verlaufen und die Oberseiten der Flächenelemente zueinander V-förmig angestellt sind, wobei die Tragstrebe eine Rinne aufweist, in die die Oberseiten der Flächenelemente hinein entwässern und die sich in Längsrichtung der Tragstrebe bis hin zu zumindest einer der Längsstreben erstreckt, und wobei die Flächenelemente mit Photovoltaikelementen ausgestattet sind, welche mit einer für Licht durchlässigen Scheibe überdeckt sind, wobei die Scheiben zumindest bereichsweise die Oberseite der Flächenelemente bilden. Diese Scheibe kann beispielsweise eine Glasscheibe oder auch eine Kunststoffscheibe sein

Die Flächenelemente sind bei dieser Dachkonstruktion in Richtung der Längserstreckung der Längsstreben wechselweise im Winkel zueinander angestellt. Der eingeschlossene Winkel zwischen zwei benachbarten Flächenelementen kann vorzugsweise im Bereich zwischen 3 und 15 Grad gewählt werden. Hierdurch ergibt sich eine zickzack-förmige Struktur für die Flächenelemente. Insbesondere kann diese Struktur derart sein, dass an die eine Seite eines Flächenelements ein benachbartes aufsteigendes Flächenelement und an der gegenüberliegenden Seite ein benachbartes abfallendes Flächenelement angeschlossen ist. Hierdurch ergibt sich insbesondere eine bausatzartige Bauweise, die entsprechend der Größe des Daches beliebig variiert werden kann. Infolge der im Winkel zueinander angestellten Flächenelemente sind zwar einige der Flächenelemente nicht ideal zur Sonne ausgerichtet, die übrigen Flächenelemente jedoch besonders vorteilhaft zur Sonne positioniert. Dabei ist der Aufbau des Dachs einfach gehalten und die Entwässerung kann zuverlässig und ohne hohen konstruktiven Aufwand erfolgen.

Gemäß einer vorteilhaften Ausgestaltungsvariante der Erfindung kann es vorgesehen sein, dass die Flächenelemente an ihren der Tragstrebe abgewandten Seiten auf weiteren Tragstreben abgestützt sind, wobei die Stützstellen der weiteren Tragstreben entgegen der Schwerkraftrichtung gegenüber den Stützstellen der Tragstreben versetzt sind, um das Gefälle auszubilden. Mit dieser einfachen Maßnahme kann mit geringem Teileaufwand die Dachkonstruktion einfach und schnell aufgestellt werden.

Eine optisch ansprechende und kompakte Bauweise kann besonders dadurch erreicht werden, dass zumindest eine der Tragstreben zueinander beabstandete Seitenwände aufweist, die über einen Boden miteinander verbunden sind, und dass die Rinne im Bereich zwischen den Seitenwänden gehalten und an diese angekoppelt ist. Über die Seitenwände kann, insbesondere wenn diese vertikal angeordnet sind, ein hohes Widerstandsmoment gegen Biegung erreicht werden. Die Rinne ist in den Bereich, der von der Tragstrebe umgeben ist, optisch integriert.

Hierbei kann es insbesondere vorgesehen sein, dass an die Seitenwände Verbindungsstücke angekoppelt sind, die in den Bereich zwischen den Seitenwänden hineinragen, dass die beiden Verbindungsstücke die Rinne tragen, und dass zumindest ein Bereich der Verbindungsstücke mit Gefälle in Richtung zu der Rinne hin geneigt ist. Die Verbindungsstücke bilden dabei die Zuleitbereiche zu der Rinne und gewährleisten entsprechend eine zuverlässige Einleitung des von der Dachfläche kommenden Wassers in die Rinne. Hierdurch wird verhindert, dass unbeabsichtigt Wasser in den Aufstellbereich des Dachs abtropft.

Zur Verringerung des Teile- und Montageaufwandes kann es vorgesehen sein, dass die Rinne hohlprofilförmig ausgebildet und über die Verbindungsstücke einteilig an die Seitenwände angekoppelt ist.

Bei einer bevorzugten Erfindungsvariante ist es vorgesehen, dass die Rinne zwei zueinander beabstandete Ränder aufweist, die in Profillängsrichtung verlaufen und zwischen denen ein Zulaufbereich in den von der Rinne umschlossenen Leitungsbereich gebildet ist. Die Ränder können dabei insbesondere Tropfkanten bilden, um eine zuverlässige Entwässerung zu gewährleisten.

Eine denkbare Erfindungsalternative ist derart, dass die Rinne von einem Abdeckprofil überdeckt ist, das sich in Längsrichtung der Tragstrebe erstreckt, und dass das Abdeckprofil Durchlässe bildet oder begrenzt die eine räumliche Verbindung zwischen dem Leitungsbereich der Rinne und einem zur Rinne führenden Zuleitbereich der Tragstrebe schafft. Das Tragprofil verhindert eine Verschmutzung der Rinne, beispielsweise mit Blättern. Die Durchlässe können so dimensioniert werden, dass das Wasser zuverlässig in die Rinne eingeleitet, die Verstopfung der Rinne mit groben Verunreinigungen jedoch verhindert werden kann.

Eine einfache Bauweise wird für das Abdeckprofil dann erreicht, wenn vorgesehen ist, dass das Abdeckprofil eine Deckwand aufweist, an die zwei zueinander beabstandete Seitenteile angeschlossen sind, und dass die Seitenteile in ihrem, der Deckwand abgekehrten Bereich Aussparungen aufweisen, zur Bildung der Durchlässe. Denkbar ist es auch, dass die Seitenteile in ihrem, der Deckwand abgekehrten Bereich Rastelemente aufweisen mittels denen das Abdeckprofil mit der Tragstrebe lösbar verrastbar ist. Mittels der Rastelemente lässt sich das Abdeckprofil sicher mit der Tragstrebe verbinden. Zu Reinigungszwecken, beispielsweise dann wenn die Rinne gesäubert werden muss, lässt sich das Abdeckprofil einfach abbauen und nach erfolgter Reinigung wieder anbauen.

Für eine hohe Stromausbeute muss die mit Fotovoltaik Modulen belegte Fläche des Dachs möglichst maximiert werden. Um diesem Anspruch gerecht zu werden, kann es erfindungsgemäß vorgesehen sein, dass die Oberflächen der an die Tragstrebe anschließenden Flächenelemente unter Einhaltung eines Spaltabstands bis an die Deckwand des Abdeckprofils herangeführt sind, wobei die Flächenelemente die darunter liegende Tragstrebe im Bereich ihrer dem Abdeckprofil zugewandten Seiten überlappen. Der Spaltabstand kann besonders klein gewählt werden, wobei die thermischen Ausdehnungen der Flächenelemente und oder das mechanische Spiel der Flächenelemente in der Fläche der Dachebene Berücksichtigung findet. Die vorbeschriebene Konstruktion hat den zusätzlichen Vorteil, dass die dem Abdeckprofil zugewandten Seiten der Flächenelemente Tropfkanten bilden, um eine sichere Entwässerung zu ermöglichen und Kapillar-Effekte zu vermeiden.

Wenn vorgesehen ist, dass die Tragstrebe bzw. die Tragstreben als Strangpressprofile vorzugsweise als Aluminium-Strangpressprofile ausgebildet ist/sind, dann lassen sich komplexe Bauteilgeometrien für die Tragstrebe einfach und kostengünstig verwirklichen. Werden Aluminium-Strangpressprofile verwendet, so ergibt sich eine besonders leichte Konstruktion. Strangpressprofile können in der gewünschten Länge einfach von einem Profilstrang abgelängt werden, was die modulartige Bauweise der Dachkonstruktion weiter vereinfacht.

Zur Verbesserung der Modulbauweise kann es zusätzlich oder alternativ auch vorgesehen sein, dass die Tragstreben mittels Verbindungsprofilen miteinander verbunden sind, wobei die Verbindungsprofile mittelbar oder unmittelbar die Ränder zweier in Längsrichtung der Tragstrebe nebeneinander angeordneter Flächenelemente stützt, und wobei das Verbindungsprofil einen Leitungsbereich bildet, der mit Gefälle zwischen zwei benachbarten Tragstreben verläuft und hin zu der Rinne einer der Tragstreben entwässert ist. Auf diese Weise lässt sich die Modulbauweise nicht nur in Richtung der Längserstreckung der Längsstreben, sondern auch in Richtung der Längserstreckung der Querstreben erweitern.

Eine erfindungsgemäße Dachkonstruktion kann dergestalt sein, dass die längsseitigen Enden der Tragstrebe oder der Tragstreben mit Verkleidungselementen überdeckt sind, wobei im Bereich der Verkleidungselemente Auslässe vorgesehen sind, durch die der von der Rinne gebildete Leitungsbereich in einen Leitungsbereich der Längsstrebe oder einem der Längsstrebe zugeordneten Leitungsbereich übergeleitet ist. Mit den Verkleidungselementen kann ein einheitlicher Abschluss der längsseitigen Enden der Tragstreben in optisch ansprechender Weise gestaltet werden.

Die Erfindung wird im Folgenden anhand eines in den Zeichnungen dargestellten Ausführungsbeispiels näher erläutert. Es zeigen:
Figur 1 in perspektivischer Darstellung einen Carport,
Figur 2 den Carport gemäß Figur 1 mit teilweise geöffnetem Dach,
Figur 3 den Carport gemäß den Figuren 1 und 2 in einer Teildarstellung und im teilmontierten Zustand,
Figur 4 den Carport gemäß den Figuren 1 bis 3 in einem teilmontierten Zustand und in Teildarstellung sowie in Ansicht auf die Längsseite des Carports,
Figur 5 ein der Figur 4 entnommenes Detail,
Figur 6 ein weiteres Detail des Carports,
Figur 7 die Darstellung gemäß Figur 6 in vergrößerter Teildarstellung und
Figur 8 eine Schnittdarstellung des Carports im Dachbereich.

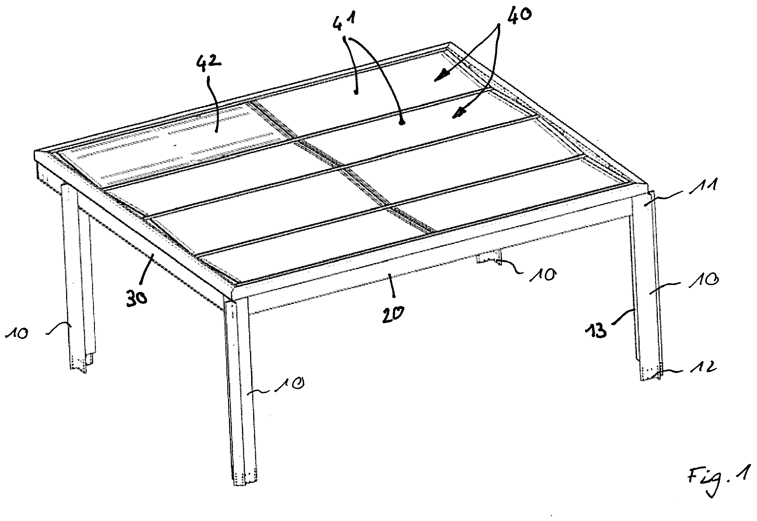

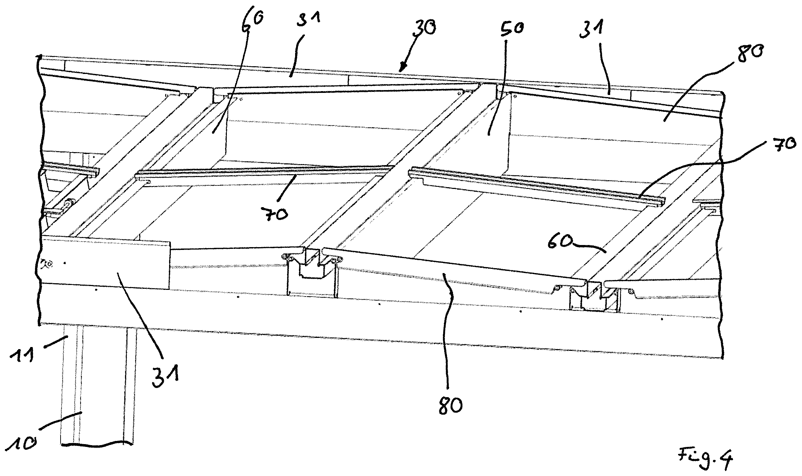

Figur 1 zeigt einen Carport. Die nachstehenden Ausführungen gelten jedoch nicht nur für einen Carport, sondern analog auch für sonstige Unterstände. Entsprechend kann die in den Figuren 1 bis 8 gezeigte Konstruktion für jegliche Art von Unterstand Verwendung finden.

Wie Figur 1 zeigt, ist eine Dachkonstruktionen vorgesehen, die von vier Pfosten 10 getragen wird. Selbstverständlich können auch mehr oder weniger Pfosten 10 vorgesehen sein. Die Pfosten 10 sind im Bereich ihres Fußes 12 mit dem Boden verankert. Der dem Fuß 12 abgewandte Kopf 11 der Pfosten 10 ist mit der Dachkonstruktion verbunden, vorzugsweise verschraubt.

Einer oder alle Pfosten 10 können mit Fallrohren 13 zur Entwässerung ausgestattet sein.

Die Dachkonstruktionen weist zwei zueinander parallele Querstreben 20 auf, die in Querrichtung der Dachkonstruktion verlaufen. Weiterhin weist die Dachkonstruktion zwei zueinander parallele Längsstreben 30 auf, die in Längsrichtung der Dachkonstruktion verlaufen.

Die Querstreben 20 und die Längsstreben 30 stoßen paarweise im Eckbereich der Dachkonstruktion aufeinander und sind hier miteinander verbunden. Weiterhin ist in diesen Eckbereichen jeweils ein Pfosten 10 angeschlossen.

Im Bereich der von den Querstreben 20 und den Längsstreben 30 umgeben ist, ergibt sich ein Aufnahmebereich. In diesem Aufnahmebereich ist eine Vielzahl von Flächenelementen 40 eingebaut. Die Flächenelemente 40 weisen Solarpaneele 42 auf, die mit einer für Licht durchlässigen Scheibe 41, vorzugsweise einer thermisch oder chemisch vorgespannten Glasscheibe, bedeckt sind. Die Scheiben 41 bilden die Deckfläche und damit die Oberseite des Flächenelements 40.

Im vorliegenden Ausführungsbeispiel sind in Richtung der Längserstreckung der Querstreben zwei Flächenelemente 40 aneinandergereiht, wobei die Flächenelemente 40 in ihrer Ausrichtung miteinander fluchten. Bei größeren Unterständen oder Carports kann es vorgesehen sein, dass mehr als zwei Flächenelemente 40 in Richtung der Querstreben 20 aneinandergereiht sind.

In Richtung der Längserstreckung der Längsstreben 30 sind vier Flächenelemente 40 aneinandergereiht. Wie Figur 1 erkennen lässt, sind in Richtung der Längserstreckung der Längsstreben 30 die Flächenelemente 40 zickzack-förmige zueinander angeordnet.

Die unmittelbar an die Querstreben 20 anschließenden Scheiben 41 der Flächenelemente 40 sind bei der zickzack-förmige Anordnung beispielsweise, ausgehend von den Querstreben 20, abfallend geneigt. An diese Flächenelemente 40 schließt sich vorzugsweise jeweils ein weiteres Flächenelement 40 in Richtung der Längserstreckung der Längsstreben 30 an, welches entgegengesetzt geneigt, also aufsteigend geneigt ist. Entsprechend ergibt sich zwischen diesen beiden Flächenelementen 40 ein von der Oberseite her gemessener eingeschlossener Winkel der <180° ist. Mit anderen Worten sind die beiden Flächenelemente 40 V-förmig zueinander angestellt.

An das aufsteigende Flächenelement 40 schließt sich wieder ein abfallendes Flächenelement 40 an. Die Scheiben 41 dieser benachbarten Flächenelemente 40 schließen entsprechend einen von der Oberseite her gemessenen Winkel größer als 180° ein.

Besonders bevorzugt ist dieser Winkel im Rahmen der Erfindung im Bereich zwischen 3 und 15 Grad gewählt hierdurch wird für verschiedene Einstrahlwinkeln der Sonne eine optimale Stromausbeute erreicht

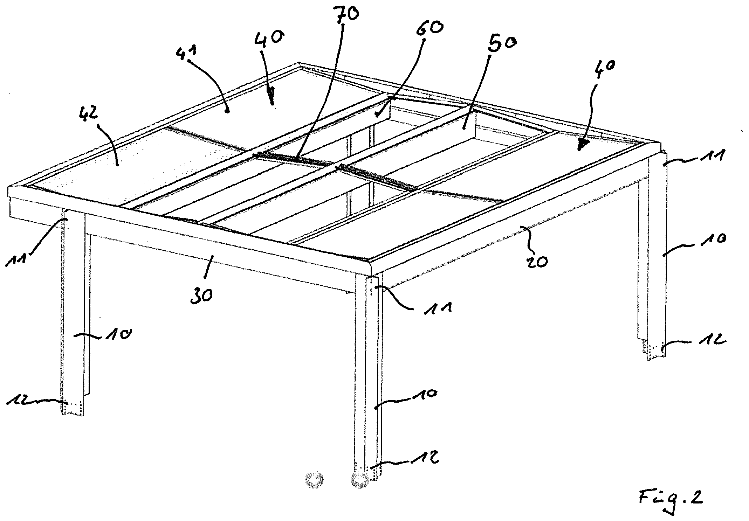

In Figur 2 ist eine Teil-Montagestellung gezeigt, bei der vier Flächenelemente 40 entfernt wurden. Wie diese Darstellung zeigt, sind die Längsstreben 30 mittels Tragstreben 50,60 miteinander verbunden. Insbesondere können die Tragstreben 50,60 zueinander parallel und parallel zu den Querstreben 20 verlaufen.

Die Tragstreben 50,60 sind an den Längsstreben 30 befestigt, insbesondere verschraubt.

In dem Bereich, in dem zwei in Richtung der Längserstreckung der Querstreben 20 aneinandergereiht Flächenelemente 40 aufeinandertreffen, sind Verbindungsprofile 70 vorgesehen. Diese Verbindungsprofile 70 verbinden zwei zueinander parallele und benachbarte Tragstreben 50,60.

Die Verbindungsprofile 70 besitzen eine Entwässerungsrinne und Stützabschnitte für die Ränder der angrenzenden Flächenelemente 40.

Wasser, welches von der Oberfläche der Flächenelemente 40 seitlich abfließt, kann in die Entwässerungsrinne der Verbindungsprofile 70 gelangen.

Mittels der Stützabschnitte können die Ränder der Flächenelemente 40, welche sich auf der Anreihseite in Richtung der Längsstreben 30 erstrecken, unterfangen und gestützt werden.

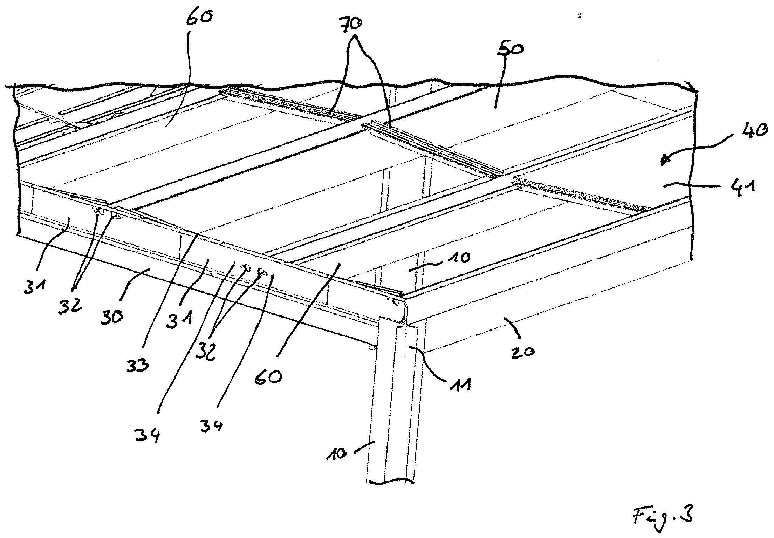

Die Entwässerungsrinnen der Verbindungsprofile 70 sind mit Gefälle verlegt, wie dies beispielsweise Figur 3 zeigt. Über dieses Gefälle kann das Wasser in der Entwässerungsrinne hin zu den Tragstreben 60 geleitet werden. Beispielsweise können die Flächenelemente 40 auch unter Zwischenlage von Dichtprofilen auf die Verbindungsprofile 70 aufgelegt sein. Diese Dichtprofile können beispielsweise aus einem elastischen Material, insbesondere aus einem Kunststoffprofil gebildet sein. Die Entwässerung kann in einem solchen Fall auch an den Dichtprofilen vorbei in die Verbindungsprofile 70 hinein erfolgen.

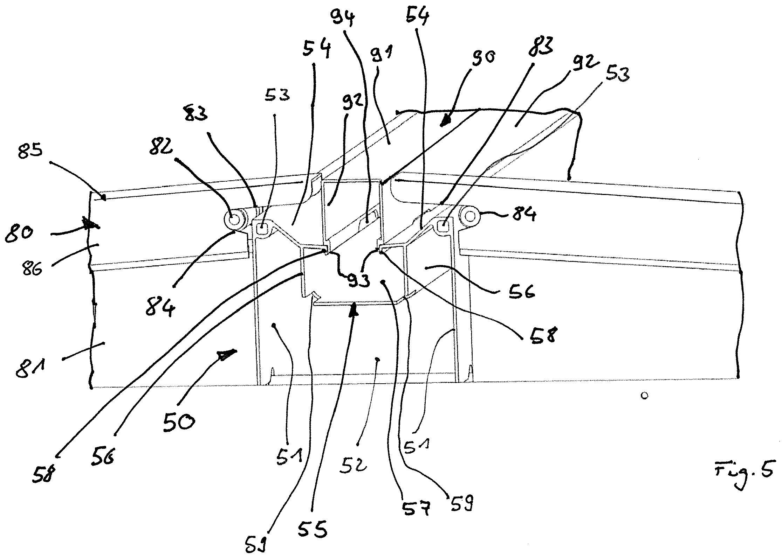

Nachfolgend wird unter Bezugnahme auf Figur 5 der Aufbau der Tragstreben 50 erläutert. Wie diese Zeichnung zeigt, weisen die Tragstreben 50 zueinander parallele Seitenwände 51 auf, die mittels eines Bodens 52 miteinander verbunden sind. Auf der dem Boden 52 abgewandten Seite gehen die Seitenwände 51 in Verbindungsstücke 54 über. Im Übergangsbereich zwischen den Seitenwänden 51 zu den Verbindungsstücken 54 können Schraubkanäle 53 vorgesehen sein. Dabei erstrecken sich dann die Längsachsen der Schraubkanäle 53 in Richtung der Längsachse der Tragstrebe 50.

Den Seitenwänden 51 abgekehrt sind die Verbindungsstücke 54 an eine Rinne 55 angeschlossen. Die Verbindungsstücke 54 schließen mit den zugekehrten Seitenwänden 51 einen spitzen Winkel ein, sodass die Verbindungsstücke 54 gegenüber der Horizontalen abfallend geneigt verlaufenden um eine Entwässerung zu ermöglichen.

Die Rinne 55 weist einen Rinnenboden 57 auf. Von diesem Rinnenboden 57 steigen Rinnenwände 56 auf, die zueinander beabstandet angeordnet sind. Dem Rinnenboden 57 abgewandt sind an die Rinnewände 56 Halteelemente 58 angeschlossen. Diese Halteelemente 58 ragen nach innen vor und sind einander zugewandt. Zwischen den Enden der Halteelemente 58 ist ein Abstandsbereich vorgesehen.

Zur Abdeckung der Rinne 55 kann ein Abdeckprofil 90 verwendet sein. Das Abdeckprofil 90 dient zur Überdeckung des Einlaufbereichs in die Rinne 55.

Wie Figur 5 zeigt, kann das Abdeckprofil 90 dergestalt sein, dass es eine Deckwand 91 aufweist. An die Deckwand 91 sind zwei Seitenteile 92 angeschlossen die Seitenteile 92 stehen in Richtung auf die Rinne 55 vor. Die freien Enden der Seitenteile 92 sind mit Rastelementen 93 ausgestattet. Die Rastelemente 93 sind dazu ausgebildet mit den Halteelementen 58 der Rinne 55 in Eingriff zu gelangen, um eine Rastverbindung zu bilden. Dementsprechend kann das Abdeckprofil 90 von oben auf die Rinne 55 aufgesetzt und mit dieser verrastet werden.

Figur 5 zeigt, dass die Seitenteile 92 mit Durchlässen 94 versehen sein können. Die Durchlässe 94 können beispielsweise in Form von Ausnehmungen ausgebildet sein, die aus den freien Rändern der Seitenteile 92 ausgespart sind. Die Durchlässe 94 schaffen eine wasserleitende Verbindung zwischen dem von der Rinne 55 umgebenen Leitungsbereich und der Oberseite der Verbindungsstücke 54. Zusätzlich oder alternativ können auch die Verbindungsstücke 54 mit Durchlässen versehen sein

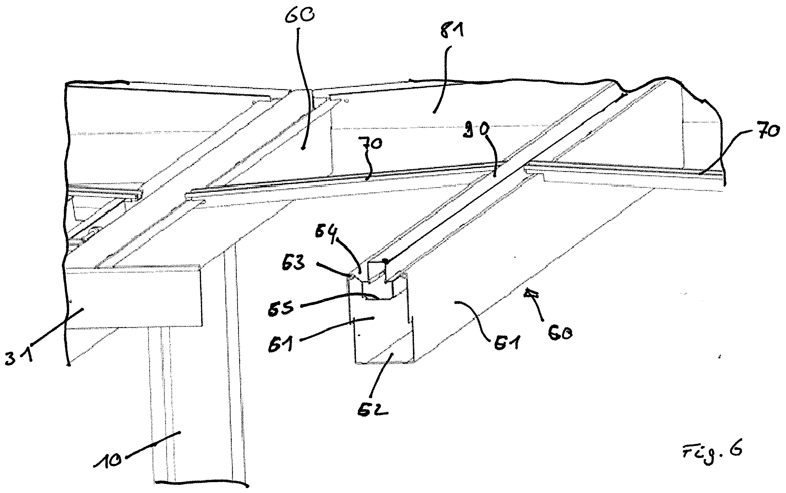

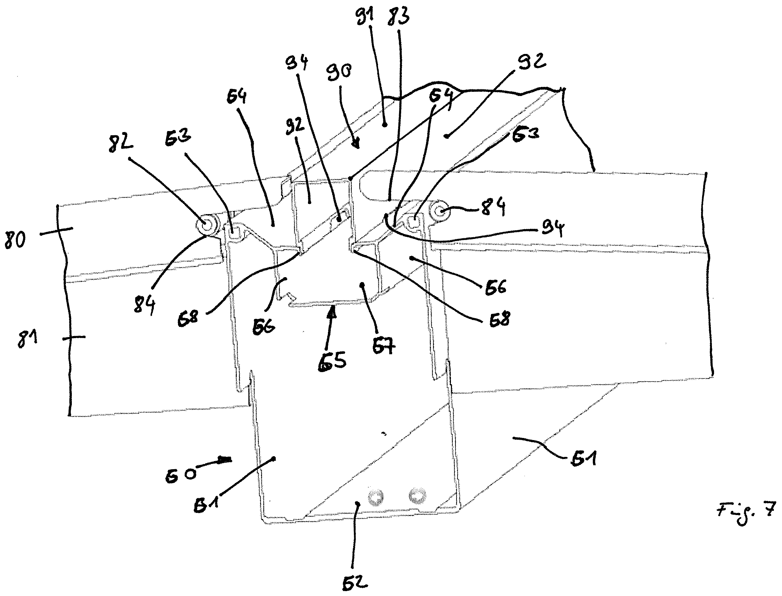

Wie Figuren 6 und 7 zeigen, sind neben den Tragstreben 50 weitere Tragstreben 60 verbaut. Die Tragstreben 60 weisen prinzipiell den gleichen Aufbau auf, wie die Tragstreben 50. Im Unterschied zu den Tragstreben 50 ist die Bauhöhe der Seitenwände 61 der Tragstreben 60 größer gewählt als die Bauhöhe der Seitenwände 51 der Tragstreben 50. Die vorstehend in Bezug auf die Tragstreben 50 gemachten Ausführungen gelten somit in gleicher Weise auch für die Tragstreben 60. Zur Vermeidung von Wiederholungen wird auf die vorstehenden Ausführungen Bezug genommen werden. Entsprechend weisen die Tragstreben 60 Seitenwände 61, einen Boden 62, Schraubkanäle 63 und Verbindungsstücke 64 auf. Mit den Verbindungsstücken 64 ist die Rinne 65 wieder einteilig verbunden. Die Rinne 65 weist einen Rinnenboden 67 und Rinnenwände 66 auf. Weiterhin sind Halteelemente 68 vorgesehen.

Die Tragstreben 50,60 können als Strangpressprofile ausgebildet sein

Die Tragstreben 50,60 werden in die Dachkonstruktionen so verbaut, dass die Böden 52,62 der Tragstreben 50,60 auf gleicher Höhe oder in etwa auf gleicher Höhe angeordnet sind. Aufgrund der unterschiedlichen Bauteilhöhe der Seitenteile 52,62 sind dann die Übergangsbereiche zwischen den Seitenwänden 51 und den Verbindungsstücken 54,64 der Tragstreben 50,60 auf unterschiedlichem Höhenniveau angeordnet. Die Verbindungsprofile 70 stützen sich in diesen Bereichen ab. Durch den Höhensprung und die Beabstandung der Tragstreben 50,60 wird die Neigung der Verbindungsprofile 70 vorgegeben.

Zwei benachbarte Flächenelemente 40 können entsprechend auf zwei zueinander beabstandet angeordneten Verbindungsprofilen 70 abgestützt sein.

Denkbar ist es jedoch auch, wie beispielsweise in Figur 5 gezeigt, dass die randseitigen Flächenelemente 40 der Dachkonstruktion in ihren den Querstreben 30 zugewandten Bereichen auf Blenden 80 randseitig abgestützt sind. Die Blenden 80 besitzen ein Wandelement 81, von dem ein Stützabschnitt 85 abgekantet ist. Von dem Stützabschnitt 85 ist wiederum eine Abwinklung 86 zurückgebogen. Auf dem Stützabschnitt 85 können die Flächenelemente 40 randseitig im Bereich der Querstreben 30 abgestützt werden.

Die Wandelemente 81 der Blenden 80 können sich in Vertikalrichtung bis hin zu den Unterseiten der Tragstreben 50,60 erstrecken, wie Figur 5 zeigt. Hierdurch wird ein optischer Abschluss geschaffen. Zur Befestigung der Blenden 80 sind Bolzen 82 an den Querstreben 30 vorgesehen. Die Blenden 80 weisen an ihren längsseitigen Enden Einhängaufnahmen 84 auf, die einen Haken 83 bilden. Mit den Haken 83 können die Blenden 80 an die Bolzen 82 angehangen werden hierdurch gelingt eine schnelle und einfache Montage.

Wie Figur 3 zeigt, können auf die längsseitigen Enden der Tragstreben 50,60 Verkleidungselemente 31 stirnseitig aufgesetzt werden. Die Verkleidungselemente 31 können als Wandelemente ausgebildet sein, die sich in Vertikalrichtung erstreckenden und die an ihrem oberen Rand eine abgekantete Befestigungswand 33 aufweisen. Zur Befestigung der Tragstreben 50,60 sind Befestigungsaufnahmen 34 vorgesehen, die in Flucht zu den Schraubkanälen 53,63 der Tragstreben 50,60 angeordnet werden können. Mittels Befestigungsschrauben, die durch die Befestigungsaufnahmen 34 hindurchgeführt und in die Schraubkanäle 53,63 eingeschraubt sind, lassen sich die Verkleidungselemente 31 stabil mit den Tragstreben 50,60 verbinden.

Zur Verbindung mit der Querstrebe 30 wird die Befestigungswand 33 auf einen Stützabschnitt der Querstrebe 30 aufgesetzt. Wie Figur 3 erkennen lässt, sind die Befestigungswände 33 mit mehreren Schraubaufnahmen ausgestattet. Durch diese Schraubaufnahmen können Befestigungsschrauben hindurchgeführt und in die Querstreben 30 eingeschraubt werden. Auf diese Weise lassen sich die Tragstreben 50,60 mit den Querstreben 30 verbinden.

Die Verkleidungselemente 31 besitzen Durchbrüche 32. Diese Durchbrüche 32 schließen an den Führungsbereich an, der von den Verbindungsstücken 54 begrenzt ist. Somit kann Wasser, welches über die Verbindungsstücke 54 abfließt nicht alleine nur durch die Durchlässe 94 abfließen, sondern auch in Richtung hin zu der Querstrebe 30. Das Wasser wird im Bereich der Querstrebe 30 dann in einer separaten Auffangrinne aufgefangen und in Richtung zu den Pfosten 10 geleitet. An den Pfosten 10 wird das Wasser dann in das Fallrohr 13 entwässert.

Das Wasser, welches durch die Rinne 55,65 abgeführt wird, fließt über endseitige Auslässe 59 der Rinne ebenfalls in die separate Auffangrinne der Querstrebe 30 und wird dem Fallrohr 13 zugeleitet.

Auf diese Weise wird eine Dachkonstruktionen geschaffen, die eine zuverlässige Entwässerung ermöglicht. An den Oberseiten der Flächenelemente 40 anstehendes Wasser wird entweder direkt in die Rinnen 55,65 entwässert, oder über die Verbindungsprofile 70 in die Rinnen 55,65 geleitet. An den längsseitigen Enden der Rinnen 55,65 wird das Wasser dann den Querstreben 30 zugeleitet und hier über eine separate Auffangrinne den Fallrohren 13 der Pfosten 10 zugeleitet.

Die Abdeckprofil 90 verhindern, dass grobe Verunreinigungen, beispielsweise Laub in die Rinnen 55,65 gelangen können. Zur Reinigung der Rinnen 55,65 kann das Abdeckprofil 90 einfach abgebaut werden. Die Rinnen 55,65 lassen sich dann mit einer Bürste reinigen. Anschließend kann das Abdeckprofil 90 wieder aufgerastet werden

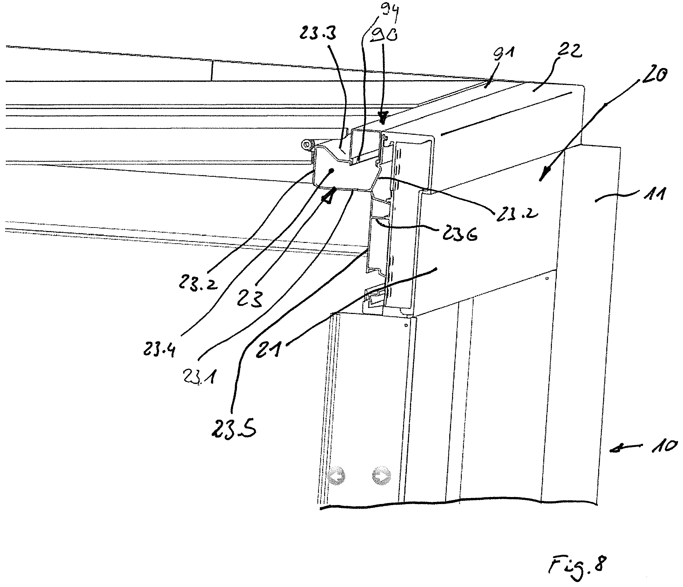

Um ein unkontrolliertes abtropfen von Wasser im Bereich der Längsstreben 20 zu verhindern, sind, wie Figur 8 zeigt, Zusatzprofile 23 an den Querstreben 20 befestigt. Die Zusatzprofile 23 sind dabei an der der Außenseite 21 abgewandten Innenseite der Querstrebe 20 befestigt. Die Zusatzprofile 23 weisen eine bodenseitige Kammerwand 23.1 und daran anschließende seitliche Kammerwände 23.2 auf. Die Kammerwand 23.2 geht in eine abgekantete Rinne 23.3 über. Das Zusatzprofil 23 umschließt einen Kanal 23.4.

Das freie Enden der Rinne 23.3 ist wieder mit Rastelementen ausgestattet. Auch die Kammerwand 23.2 weist solche Rastelemente auf. Mit diesen Rastelementen können Abdeckprofile 90 verrastet werden. Die Abdeckprofil 90 sind vorzugsweise baugleich mit den vorstehend beschriebenen Abdeckprofilen 90. Die Gestaltung der Abdeckprofil 90 kann dabei so sein, dass eine Deckwand 22 der Querstrebe 20 oberflächenbündig in die Deckwand 91 des Abdeckprofils 90 übergeht.

Das ablaufende Wasser im Bereich der parallel zu den Querstreben 20 verlaufenden Querseiten der Flächenelemente 40 kann in den Bereich des Zusatzprofils 23 gelangen. Das Wasser läuft entsprechend über die Rinne 23.3 ab und gelangt in den Kanal 23.4. Der Kanal 23.4 ist wieder in Richtung zu den Fallrohren 13 hin entwässert

Wie Figur 8 zeigt, ist zur Verbindung der Rinne 23.3 ein Befestigungsstück 23.5 vorgesehen, das als Strangpressprofile ausgebildet sein kann. Das Befestigungsstück 23.5 ist über Verbindungsstücke 23.6 mit der Querstrebe 20 verbunden.

Die vorstehend beschriebene Dachkonstruktion ist für einen Carport oder einen sonstigen beliebigen Unterstand geeignet. Die Dachkonstruktion weist Längs- und Querstreben 20, 30 auf, die in den Eckbereichen des Dachs mittelbar oder unmittelbar miteinander verbunden sind, wobei die Längsstreben 30 über Tragstreben 50, 60 miteinander gekoppelt sind, die sich zumindest bereichsweise zwischen den Längsstreben 30 erstrecken. Die Tragstreben 50,60 können vorzugsweise im gleichen Abstand zueinander beabstandet angeordnet sein, um eine modulartige Bauweise zu verwirklichen. An zumindest einer der Tragstrebe 50 sind Flächenelemente 40 an gegenüberliegenden Seiten angeschlossen, die einen Teil der Dachfläche bilden und die zueinander in einem Winkel stehen, um ein Dachgefälle zur Ableitung von Regenwasser derart zu bilden, dass die Flächenelemente 40 in Richtung zu der Tragstrebe 50 hin geneigt zur Horizontalen verlaufen und die Oberseiten der Flächenelemente 40 zueinander V-förmig angestellt sind, wobei die Tragstrebe 50 eine Rinne 55 aufweist, in die die Oberseiten der Flächenelemente 40 hinein entwässern und die sich in Längsrichtung der Tragstrebe 50 bis hin zu zumindest einer der Längsstreben 30 erstreckt. Erfindungsgemäß weisen die Flächenelemente 40 Photovoltaikelementen auf. Sie können, welche mit einer für UV-Strahlung durchlässigen Scheibe 41 überdeckt sein, wobei die Scheiben 41 zumindest bereichsweise die Oberseite der Flächenelemente 40 bilden.

## Patentansprüche

1. Dachkonstruktion für einen Carport oder einen Unterstand mit Längs- und Querstreben (20, 30), die in den Eckbereichen des Dachs mittelbar oder unmittelbar miteinander verbunden sind, wobei die Längsstreben (30) über Tragstreben (50, 60) miteinander gekoppelt sind, die sich zumindest bereichsweise zwischen den Längsstreben (30) erstrecken, wobei an zumindest einer Tragstrebe (50) Flächenelemente (40) an gegenüberliegenden Seiten angeschlossen sind, die einen Teil der Dachfläche bilden und die zueinander in einem Winkel stehen, um ein Dachgefälle zur Ableitung von Regenwasser derart zu bilden, dass die Flächenelemente (40) in Richtung zu der Tragstrebe (50) hin geneigt zur Horizontalen verlaufen und die Oberseiten der Flächenelemente (40) zueinander V-förmig angestellt sind, wobei die Tragstrebe (50) eine Rinne (55) aufweist, in die die Oberseiten der Flächenelemente (40) hinein entwässern und die sich in Längsrichtung der Tragstrebe (50) bis hin zu zumindest einer der Längsstreben (30) erstreckt, und wobei die Flächenelemente (40) mit Photovoltaikelementen ausgestattet sind, welche mit einer für Licht durchlässigen Scheibe (41) überdeckt sind, wobei die Scheiben (41) zumindest bereichsweise die Oberseite der Flächenelemente (40) bilden.

2. Dachkonstruktion nach Anspruch 1, **dadurch gekennzeichnet, dass** die Flächenelemente (40) an ihren der Tragstrebe (50) abgewandten Seiten auf weiteren Tragstreben (60) abgestützt sind, wobei die Stützstellen der weiteren Tragstreben (60) entgegen der Schwerkraftrichtung gegenüber den Stützstellen der Tragstreben (50) versetzt sind, um das Gefälle auszubilden.

3. Dachkonstruktion nach einem der Ansprüche 1 oder 2, **dadurch gekennzeichnet, dass** zumindest eine der Tragstreben (50, 60) zueinander beabstandete Seitenwände (51, 61) aufweist die über einen Boden (52, 62) miteinander verbunden sind, und dass die Rinne (55, 65) im Bereich zwischen den Seitenwänden (51, 61) gehalten und an diese angekoppelt ist.

4. Dachkonstruktion nach Anspruch 3, **dadurch gekennzeichnet, dass** an die Seitenwände (51, 61) Verbindungsstücke (54, 64) angekoppelt sind, die in den Bereich zwischen den Seitenwänden (51, 61) hineinragen, dass die beiden Verbindungsstücke (54, 64) die Rinne (55, 65) tragen, und dass zumindest ein Bereich der Verbindungsstücke (54, 64) mit Gefälle in Richtung zu der Rinne (55, 65) hin geneigt ist.

5. Dachkonstruktion nach einem der Ansprüche 3 oder 4, **dadurch gekennzeichnet, dass** die Rinne (55, 65) hohlprofilförmig ausgebildet und über die Verbindungsstücke (54, 64) einteilig an die Seitenwände (51, 61) angekoppelt ist.

6. Dachkonstruktion nach einem der Ansprüche 1 bis 5, **dadurch gekennzeichnet, dass** die Rinne (55, 65) zwei zueinander beabstandete Ränder aufweist, die in Profillängsrichtung verlaufen und zwischen denen ein Zulaufbereich in den von der Rinne (55, 65) umschlossenen Leitungsbereich gebildet ist.

7. Dachkonstruktion nach einem der Ansprüche 1 bis 6, **dadurch gekennzeichnet, dass** die Rinne (55, 56) von einem Abdeckprofil (90) überdeckt ist, das sich in Längsrichtung der Tragstrebe (50, 60) erstreckt, und dass das Abdeckprofil (90) Durchlässe (94) bildet oder begrenzt die eine räumliche Verbindung zwischen dem Leitungsbereich der Rinne (55, 65) und einem zur Rinne (55, 65) führenden Zuleitbereich der Tragstrebe (50, 60) schafft.

8. Dachkonstruktion nach Anspruch 7, **dadurch gekennzeichnet, dass** das Abdeckprofil (90) eine Deckwand (91) aufweist, an die zwei zueinander beabstandete Seitenteile (92) angeschlossen sind, dass die Seitenteile (92) in ihrem, der Deckwand (91) abgekehrten Bereich Aussparungen aufweisen, zur Bildung der Durchlässe (94) und/oder dass die Seitenteile (92) in ihrem, der Deckwand (91) abgekehrten Bereich Rastelemente (93) aufweisen mittels denen das Abdeckprofil (90) mit der Tragstrebe (50) lösbar verrastbar ist.

9. Dachkonstruktion nach einem der Ansprüche 1 bis 8, **dadurch gekennzeichnet, dass** die Flächenelemente (40) unter Einhaltung eines Spaltabstands bis an die Deckwand (91) des Abdeckprofils (90) herangeführt sind, wobei die Flächenelemente (40) die darunter liegende Tragstrebe (50, 60) im Bereich ihrer dem Abdeckprofil (90) zugewandten Seiten überlappen.

10. Dachkonstruktion nach einem der Ansprüche 1 bis 9, **dadurch gekennzeichnet, dass** die Tragstrebe (50, 60) bzw. die Tragstreben (50, 60) als Strangpressprofile ausgebildet ist/sind.

11. Dachkonstruktion nach einem der Ansprüche 1 bis 10, **dadurch gekennzeichnet, dass** die Tragstreben (50, 60) mittels Verbindungsprofilen (70) miteinander verbunden sind, wobei die Verbindungsprofile (70) mittelbar oder unmittelbar die Ränder zweier in Längsrichtung der Tragstrebe (50, 60) nebeneinander angeordneter Flächenelemente (40) stützt, und wobei das Verbindungsprofil (70) einen Leitungsbereich bildet, der mit Gefälle zwischen zwei benachbarten Tragstreben (50, 60) verläuft und hin zu der Rinne (55, 65) einer der Tragstreben (50, 60) entwässert ist.

12. Dachkonstruktion nach einem der Ansprüche 1 bis 11, **dadurch gekennzeichnet, dass** die längsseitigen Enden der Tragstrebe (50, 60) oder der Tragstreben (50, 60) mit Verkleidungselementen (31) überdeckt sind wobei im Bereich der Verkleidungselemente (31) Auslässe (59) vorgesehen sind, durch die der von der Rinne (55, 65) gebildete Leitungsbereich in einen Leitungsbereich der Längsstrebe (30) oder einem der Längsstrebe (30) zugeordneten Leitungsbereich übergeleitet ist.
